# DEMANDE DE BREVET EUROPEEN

(11) **EP 0 800 256 A1**
(43) Date de publication de la demande: **08.10.1997**
(21) Numéro de dépôt: 97400763.5
(22) Date de dépôt: 02.04.1997
(51) Int. Cl.: H02K 9/16, H02K 5/18

(54) **Refroidisseur pour moteurs électriques, compresseurs, onduleurs et analogues**

(30) Priorité: 03.04.1996 FR 9604189
(71) Demandeur: SOCIETE D'ETUDES ET DE CONSTRUCTIONS AERO-NAVALES, F-92230 Gennevilliers (FR)
(72) Inventeur: Rolland, André Charles, 93800 Epinay sur Seine (FR)
(74) Mandataire: Madeuf, René Louis

(57) **Abrégé**

Refroidisseur pour moteurs électriques, compresseurs, onduleurs et autres dispositifs reliés les uns aux autres et munis d'un organe de mise en circulation d'un gaz refroidisseur, caractérisé en ce qu'on prévoit que le dispositif (1) du genre moteur comporte une enveloppe lisse (5) au moins dans la zone correspondant à ses organes diffusant de la chaleur, notamment les pièces polaires, et en ce qu'on recouvre ladite enveloppe lisse par au moins un segment de refroidisseur (14) comportant une feuille externe (16) pour au moins un dissipateur (17) et une colle pour relier le segment refroidisseur (14) à l'enveloppe (5) en délimitant des canaux de circulation pour le gaz refroidisseur en circulation.

## Description

La présente invention concerne le refroidissement d'organes produisant de la chaleur, notamment le refroidissement d'un moteur électrique.

Dans certains cas, les moteurs électriques comportent une enveloppe extérieure munie d'ailettes servant à la dissipation de la chaleur produite par le moteur et dégagée notamment par ses pièces polaires.

Dans certaines constructions, les moteurs présentent une enveloppe lisse et un circuit interne de refroidissement, ce qui permet d'en réduire le poids mais il est apparu que ces moteurs pouvaient difficilement être mis en oeuvre par exemple dans des blocs de conditionnement d'air compacts dans lesquels tant le moteur que le compresseur, l'onduleur et les différents accessoires qui y sont associés sont eux-mêmes disposés dans un carter. En outre, le refroidissement est rendu difficile pour des moteurs étanches.

De tels groupes compacts sont utilisés dans de nombreuses applications, par exemple en aéronautique, et il y a lieu d'assurer le refroidissement de leurs constituants par une circulation d'un fluide, par exemple de l'air.

L'invention vise à résoudre ce problème en munissant les moteurs, compresseurs et autres organes d'éléments de complément qui rendent possible d'assurer leur refroidissement de façon très efficace sans augmenter leur poids de façon appréciable et en n'occupant qu'une très faible place dans le carter, boîtier ou conteneur dans lequel sont disposées les machines considérées.

Conformément à l'invention, le refroidisseur pour moteurs électriques, compresseurs, onduleurs et autres dispositifs reliés les uns aux autres et munis d'un organe de mise en circulation d'un gaz refroidisseur est caractérisé en ce qu'on prévoit que le dispositif du genre moteur comporte une enveloppe lisse au moins dans la zone correspondant à ses organes diffusant de la chaleur, notamment les pièces polaires, et en ce qu'on recouvre ladite enveloppe lisse par au moins un segment de refroidisseur comportant une feuille externe pour au moins un dissipateur formé d'une feuille mince ondulée et un moyen de liaison tel qu'une colle conductrice reliant le segment de refroidisseur à l'enveloppe en délimitant des canaux de circulation pour le gaz refroidisseur en circulation.

Diverses autres caractéristiques de l'invention ressortent d'ailleurs de la description détaillée qui suit.

Des formes de réalisation de l'objet de l'invention sont représentées, à titre d'exemples non limitatifs, au dessin annexé.

La fig. 1 est une coupe-élévation schématique transversale d'un moteur électrique faisant application du refroidisseur de l'invention.

La fig. 2 est une coupe longitudinale schématique du même moteur muni du refroidisseur.

La fig. 3 est une perspective schématique d'un ensemble refroidisseur d'une autre configuration.

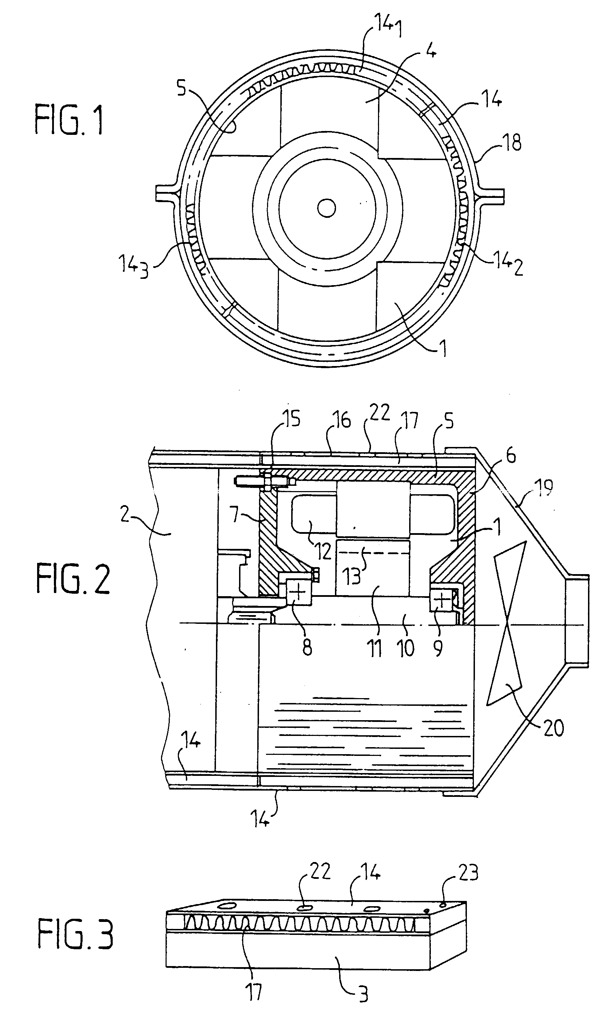

Le dessin montre aux fig. 1 et 2 un dispositif constitué par un moteur électrique 1 relié pour l'entraîner à une machine réceptrice 2, par exemple un compresseur d'une installation de climatisation comportant un onduleur qui peut se présenter comme illustré à la fig. 3 sous la forme d'un parallélépipède 3.

Le moteur électrique 1 comporte des pièces polaires 4 constituées par des paquets de tôle maintenus dans une enveloppe 5 de forme cylindrique qui fait ou non partie du circuit magnétique statique du moteur. L'enveloppe 5 est en matière ferromagnétique si elle participe au circuit magnétique du moteur ou en alliage d'aluminium ou autre matière si elle ne participe pas à ce circuit magnétique.

D'une manière générale, les alliages d'aluminium utilisés dans ce dernier cas sont moulés ou réalisés à partir de feuilles roulées.

L'enveloppe 5 est reliée à des parties frontales 6, 7, de préférence de même métal, qui portent des paliers 8, 9 pour un arbre 10 supportant le rotor 11 du moteur.

De façon habituelle, les pièces polaires 4 sont munies d'enroulements 12 et le rotor 11 d'aimants permanents 13.

L'enveloppe 5 du moteur 1 est entourée, sur tout ou partie de sa surface, mais au moins sur la partie de sa surface qui se trouve en regard des pièces polaires 4, d'un refroidisseur 14.

Le refroidisseur 14 est constitué par deux feuilles 15, 16 en cuivre, en aluminium, en nickel ou alliage de ces métaux entre lesquelles des dissipateurs 17 sont brasés ou fixés par un autre moyen, par exemple par une colle avantageusement conductrice, c'est-à-dire une colle chargée de poudre métallique, notamment de poudre d'aluminium, de cuivre ou autre matière appropriée.

La fig. 1 montre que le refroidisseur 14 peut être constitué par plusieurs segments ou secteurs 14₁, 14₂, 14₃ ... qui sont collés sur la surface de l'enveloppe 5 au moyen d'une colle appropriée, elle-même chargée de poudre métallique.

Le cas échéant et lorsque le refroidisseur est constitué en plusieurs segments ou secteurs, une ou plusieurs frettes de maintien 18 peuvent être prévues pour empêcher tout risque de décollement desdits segments de refroidisseur.

Les dissipateurs 17 sont constitués par des feuilles minces ondulées comme illustré par les fig. 1 et 3.

Outre ce qui précède, il est prévu de mettre le refroidisseur 14 dans une veine d'air ou autre gaz refroidisseur en circulation, ce qui est assuré, dans l'exemple représenté, par un capot 19 prolongeant le refroidisseur 14 et dans lequel est disposée une hélice ou une turbine 20 entraînée par le moteur électrique 1 ou un moteur indépendant.

La machine réceptrice 2, par exemple un compresseur, est avantageusement munie, à sa périphérie, de refroidisseurs 14 analogues à celui du moteur électrique 1 et montés de même manière.

Lorsque la machine réceptrice 2 est distante de l'une des parties frontales 7 du moteur comme c'est le cas dans la réalisation de la fig. 2, le refroidisseur 14 fait saillie au-delà de ladite machine réceptrice pour être raccordé au refroidisseur 14, de sorte que la veine d'air circulant dans ce dernier engendre également un courant à l'intérieur du dissipateur revêtant la machine réceptrice.

Outre ce qui précède, il est avantageux de prévoir, dans la feuille 16 formant l'enveloppe externe des refroidisseurs 14, des trous ou crevés 22 disposés de place en place et destinés à aspirer des gaz plus froids entourant la feuille 16 constituant l'enveloppe du refroidisseur.

La fig. 3 montre qu'un même type de refroidisseur 14 peut être mis en place sur un onduleur ou autre organe 3 auquel il est collé comme décrit ci-dessus au moyen d'une colle avantageusement conductrice. Des organes de fixation 23, par exemple des vis, peuvent supplémentairement relier le refroidisseur 14 à l'onduleur 3 pour servir d'organes de sécurité.

Dans une variante, la feuille interne 15 du refroidisseur est supprimée. Dans ce cas, ce sont les dissipateurs 14 qui sont directement collés par leurs ondulations sur l'enveloppe 5, l'onduleur 3 ou autre dispositif à refroidir.

Les colles mises en oeuvre pour le collage des segments refroidisseurs peuvent être de natures diverses. A titre d'exemple, des colles bi-composantes de la société CIBA ont été utilisées en particulier celles de références HV 998 et AV 138 supportant une température continue de 140°C et des pointes à 200°C de même que celles portant la référence AV 4415 et AV 4416 supportant une température continue de 180°C. D'autres colles sont satisfaisantes par exemple celle vendue sous la marque 3M référence AV 118 ou 119 qui supporte une température continue de 140°C et des pointes à 200°C. Des films adhésifs double face d'une épaisseur de 5µ portant aussi la marque 3M ont permis de supporter une température continue de 150°C et des pointes de température à 260°C pendant une durée supérieure à 15 minutes.

L'invention n'est pas limitée aux exemples de réalisation, représentés et décrits en détail, car diverses modifications peuvent y être apportées sans sortir de son cadre.

En particulier, selon une variante, les segments refroidisseurs sont montés de façon amovible et maintenus par une frette ou autre organe de serrage. Dans ce cas, une graisse conductrice est de préférence interposée entre chaque segment refroidisseur et le dispositif qui le supporte.

## Revendications

1. Refroidisseur pour moteurs électriques, compresseurs, onduleurs et autres dispositifs reliés les uns aux autres et munis d'un organe de mise en circulation d'un gaz refroidisseur, caractérisé en ce qu'on prévoit que le dispositif (1) du genre moteur comporte une enveloppe lisse (5) au moins dans la zone correspondant à ses organes diffusant de la chaleur, notamment les pièces polaires, et en ce qu'on recouvre ladite enveloppe lisse par au moins un segment de refroidisseur (14) comportant une feuille externe (16) pour au moins un dissipateur formé d'une feuille mince ondulée (17) et un moyen de liaison tel qu'une colle conductrice pour relier le segment refroidisseur à l'enveloppe (5) en délimitant des canaux de circulation pour le gaz refroidisseur en circulation.

2. Refroidisseur suivant la revendication 1, caractérisé en ce que la feuille externe (16) du segment refroidisseur présente des trous ou crevés (22).

3. Refroidisseur suivant l'une des revendications 1 ou 2, caractérisé en ce qu'il comporte une feuille interne (15) reliée au dissipateur (17) et à l'enveloppe lisse.

4. Refroidisseur suivant l'une des revendications 1 à 3, caractérisé en ce qu'au moins la feuille externe (16) est reliée au dissipateur par brasure.

5. Refroidisseur suivant l'une des revendications 1 à 4, caractérisé en ce que les segments refroidisseurs (14) du dispositif constitué par un moteur électrique (1) et une machine réceptrice (2) sont reliés les uns aux autres, de sorte que la circulation du gaz refroidisseur est assurée de l'un à l'autre.

6. Refroidisseur suivant l'une des revendications 1 à 5, caractérisé en ce qu'il est maintenu, supplémentairement, par au moins une frette (18) ou un autre organe de fixation (23).

7. Refroidisseur suivant l'une des revendications 1 à 6, caractérisé en ce que le gaz refroidisseur est mis en mouvement par une hélice ou une turbine (20) entraînée par un moteur électrique (1), ladite hélice ou turbine étant disposée dans un capot (19) relié au refroidisseur (14).

8. Refroidisseur suivant la revendication 1, caractérisé en ce que le dissipateur ou la feuille interne du segment refroidisseur est relié à l'enveloppe lisse par un film adhésif double-face.

9. Refroidisseur suivant l'une des revendications 1 à 6, caractérisé en ce que chaque segment refroidisseur est monté de façon amovible avec interposition d'une graisse conductrice.

10. Refroidisseur pour moteurs électriques, compresseurs, onduleurs et analogues sensiblement tel que décrit et représenté aux dessins annexés.
